# EUROPÄISCHE PATENTSCHRIFT

(11) **EP 2 982 527 B1**
(45) Veröffentlichungstag und Bekanntmachung des Hinweises auf die Patenterteilung: **06.09.2017**
(21) Anmeldenummer: 15001760.6
(22) Anmeldetag: 15.06.2015
(51) Int. Cl.: B60G 7/00, B60G 11/30, B60G 9/02

(54) **VIERPUNKTLENKER**
FOUR POINT LINK
BIELLE À QUATRE POINTS

(30) Priorität: 09.08.2014 DE 102014011861
(43) Veröffentlichungstag der Anmeldung: 10.02.2016
(73) Patentinhaber: MAN Truck & Bus AG, 80995 München (DE)
(72) Erfinder: Ziehlke, Jürgen, 85416 Langenbach (DE); Mendler, Hardy, 85221 Dachau (DE); Grötzinger, Josef, 84032 Landshut (DE); Marchal, Arnaud, 85276 Pfaffenhoffen (DE); Meyer Tuve, Harald, 85247 Schwabhausen (DE)
(74) Vertreter: v. Bezold & Partner Patentanwälte - PartG mbB

(56) Entgegenhaltungen:
- EP-A1- 1 609 635
- EP-A1- 2 684 714
- WO-A1-2012/175645
- DE-C1- 3 412 578
- JP-A- H11 139 129
- JP-A- 2002 144 838
- US-A- 3 208 766
- US-A- 5 711 544
- US-A- 5 718 445
- US-A1- 2004 188 973

## Beschreibung

Die Erfindung betrifft einen Vierpunktlenker zur Anbindung einer Fahrzeugstarrachse an einem Fahrzeugrahmen eines Fahrzeugs, insbesondere eines Nutzfahrzeugs, mit vier durch einen Zentralbereich fest miteinander verbundenen und sich von dem Zentralbereich wegerstreckenden Lenkerarmen, von denen zwei erste Lenkerarme an dem Fahrzeugrahmen und zwei zweite Lenker an der Fahrzeugachse anlenkbar sind.

Es werden vielfach Achsaufhängungen für Nutzfahrzeuge eingesetzt, die aus einer Achsführung durch an beiden Fahrzeugseiten angeordnete Längslenker, die einerseits an der Fahrzeugachse und andererseits am Fahrzeugaufbau angelenkt sind, und einem in der Fahrzeugmitte mit einem Zentralgelenk an der Fahrzeugachse verankerten und mit den Enden seiner beiden Streben andererseits am Fahrzeugaufbau angelenkten Dreieckslenker gebildet wird. Zur Stabilisierung ist ferner ein im Allgemeinen U-förmiger Stabilisatorstab vorgesehen.

Nachteilig an diesen bekannten Achsaufhängungen sind der Bauraumbedarf für die Anordnung des Stabilisatorstabes und die kostenaufwändige Gestaltung der Achsaufhängung.

Eine weniger Bauraum beanspruchende Achsaufhängung für Starrachsen ist aus der DE 195 21 874 A1 bekannt. Die vorgeschlagene Achsaufhängung weist einen Vierpunktlenker auf, bestehend aus zwei stabilen Gelenkarmen, die durch ein Flächentragwerk fest miteinander verbunden sind, wobei Letzteres verwindbar mit definierter Kennlinie der Verwindung ausgeführt ist. Hierbei sind die Gelenkverbindungen der Längslenker unterhalb der Fahrzeugachse angeordnet, während der Vierpunktlenker oberhalb der Fahrzeugachse und damit auch oberhalb der Längslenker angeordnet ist. Zwar ist mit diesem Vierpunktlenker kein gesonderter Bauraum für die Lagerung eines Stabilisatorstabs mehr erforderlich; dennoch erschwert der erforderliche Bauraum dieser Achsaufhängung deren Anordnung insbesondere bei einer gelenkten Vorderstarrachse eines Nutzfahrzeugs, da dort der verfügbare Bauraum aufgrund von Motorkomponenten und anderen Bauteilen besonders beschränkt ist.

Aus der US 5 718 445 A ist ein Fahrzeugaufhängungssystem bekannt, aufweisen ein paar von Steuerarmen und ein dazwischen angeordneter Torsionsstab. Der Torsionsstab ist röhrenförmig ausgeführt. Aus der JP 2002 144838 A ist ferner ein Luftfiltersystem bekannt, bei dem in einer Stabilisatorvorrichtung ein Tank untergebracht ist, um Luftfilter zu versorgen.

Aus der US 2004/0188973 A1 ist eine Achsaufhängung bekannt, aufweisend einen Vierpunktlenker und zwei Längslenker.

Der Erfindung liegt die Aufgabe zugrunde, eine einfachere, raum- und/oder kostensparendere Gestaltung einer solchen Achsaufhängung zu ermöglichen.

Diese Aufgabe wird durch einen Vierpunktlenker mit dem Merkmal des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der erfindungsgemäße Vierpunktlenker zur Anbindung einer Fahrzeugstarrachse an einem Fahrzeugrahmen eines Fahrzeugs, insbesondere eines Nutzfahrzeugs, weist in Übereinstimmung mit dem Stand der Technik vier durch einen Zentralbereich fest miteinander verbundene und sich von dem Zentralbereich wegerstreckende Lenkerarme auf, von denen zwei erste Lenkerarme an dem Fahrzeugrahmen und zwei zweite Lenkerarme an der Fahrzeugachse anlenkbar sind. Die vier Lenkerarme können sich von dem Zentralbereich unter Ausbildung eines Kreuzes oder H-förmigen Struktur wegerstrecken.

Gemäß allgemeinen Gesichtspunkten der Erfindung ist der Vierpunktlenker dadurch gekennzeichnet, dass der Zentralbereich einen Hohlraum aufweist. Der Hohlraum kann geschlossen oder verschließbar ausgeführt sein.

Der Hohlraum ist hierbei zur Speicherung eines Fluids ausgebildet. Das Fluid kann beispielsweise Druckluft zum Betrieb der Luftfederung der luftgefederten Fahrzeugstarrachse sein oder Lenköl zum Betrieb der Lenkanlage des Fahrzeugs. Bei Verwendung eines derartigen Vierpunktlenkers zusammen mit zwei Längslenkern in einer Achsaufhängung dient der Vierpunktlenker nicht nur der Fahrzeuglängs- und Fahrzeugquerführung und der Fahrzeugstabilisierung, sondern gleichzeitig auch als Speicher für ein Fluid. Dadurch kann auf einen separaten Speicherbehälter für das Fluid verzichtet werden, wodurch der erforderliche Bauraum im Bereich der Achsaufhängung weiter reduziert werden kann.

Der Zentralbereich ist als Mittelteil ausgeführt, an dessen Enden je ein Schenkel im Wesentlichen senkrecht zum Mittelteil drehfest angeordnet ist, wobei ein erster Abschnitt der Schenkel jeweils durch einen der ersten Lenkerarme und ein zweiter Abschnitt der Schenkel jeweils durch einen der zweiten Lenker-arme gebildet werden. Die Schenkel können gerade sein oder auch einen gekrümmten oder geschwungenen Verlauf aufweisen.

Das Mittelteil ist vorzugsweise rohrförmig oder hohlzylinderförmig ausgeführt.

Der Vierpunktlenker, insbesondere der Zentralbereich bzw. das Mittelteil sind verwindbar ausgeführt zur Ausbildung einer Stabilisierungseinrichtung, die seitlichen Wank- und Kippbewegungen durch Torsionsspannungen entgegenwirkt.

Das Mittelteil ist ferner so ausgeführt, dass sich das Volumen des Hohlraums des Mittelteils bei einer Torsionsbewegung des Mittelteils verändert. Bei Speicherung von Druckluft oder anderen Fluiden in dem Hohlraum können dadurch die physikalischen Eigenschaften des Fahrwerks mittels des Vierpunktlenkers gezielt beeinflusst werden, beispielsweise über die Eigenfrequenz, eine aktive Wankstabilisierung oder die Steifigkeit der Achsaufhängung.

Bei einer vorteilhaften Variante dieser Ausgestaltungsform ist das Mittelteil hohlzylinderförmig, gekröpft und/oder zumindest abschnittsweise verjüngend ausgeführt. Bei Auftreten einer Torsionsspannung ändert sich insbesondere an den verjüngend oder gekröpft ausgeführten Abschnitten des Mittelteils das umschlossene Volumen und somit das gesamte Volumen des Hohlraums.

Ferner kann das Mittelteil aus einem duktilen Werkstoff, z. B. aus einem duktilen Stahl, gefertigt sein, was ebenfalls eine Veränderung des Hohlraums des Mittelteils bei einer Tordierung ermöglicht. Hierbei ist die Duktilität des Mittelteils so auszulegen, dass einerseits die gewünschte Volumensänderung ermöglicht wird, aber andererseits sichergestellt wird, dass eine ausreichende Steifigkeit und Festigkeit unter Berücksichtigung der auftretenden Lasten sichergestellt werden.

Ferner kann der Zentralbereich bzw. das Mittelteil einen Anschluss für die Fluidversorgung aufweisen, um dem Hohlraumspeicher das Fluid zuzuführen bzw. zu entnehmen.

Der Vierpunktlenker kann mehrteilig ausgeführt sein, wobei das Mittelteil über eine formschlüssige Verbindung, vorzugsweise eine Verzahnung, mit den Schenkeln verbunden ist, wobei die formschlüssige Verbindung zusätzlich über eine Niet- oder Schraubverbindung gesichert ist. Ferner besteht im Rahmen der Erfindung die Möglichkeit, dass das Mittelteil stoffschlüssig mit den Schenkeln verbunden ist, vorzugsweise durch Kleben oder Schweißen.

Der als geschlossener Hohlraum ausgeführte Zentralbereich kann auch aus einem Kunststoff oder zumindest teilweise aus einem Kunststoff gefertigt sein, wobei der Kunststoff vorzugsweise ein glasfaser- oder kohlenstofffaserverstärkter Kunststoff ist.

Ferner kann eine im montierten Zustand des Vierpunktlenkers der Fahrbahn zugewandte Seite des Vierpunktlenkers eine bessere schlagdämpfende Eigenschaft aufweisen als eine der Fahrbahn abgewandte Seite. Dadurch kann die Unterseite des Vierpunktlenkers durch Beschädigung aufgrund von im Betrieb hochgeschleuderter Steine oder anderer Gegenstände geschützt werden und damit auch der Fluidspeicher. Alternativ besteht die Möglichkeit, nur die Lenkerarme so auszugestalten, dass sie bessere schlagdämpfende Eigenschaften aufweisen, da eine Beschädigung der Lenkerarme eine sicherheitsrelevante Beeinträchtigung der Längsführung des Fahrzeugs nach sich ziehen kann.

Gemäß einer vorteilhaften Variante dieser Ausgestaltungsform kann beispielsweise eine der Fahrbahn zugewandte Seite des Vierpunktlenkers zumindest teilweise mit einer Gummibeschichtung versehen sein. Ferner besteht die Möglichkeit, dass die der Fahrbahn zugewandte Seite des Vierpunktlenkers zumindest teilweise aus einem Material mit höherer Duktilität als die der Fahrbahn abgewandte Seite gebildet ist. Beispielsweise kann die der Fahrbahn zugewandte Seite des Vierpunktlenkers aus einem duktilen Stahl gefertigt sein.

Die Erfindung betrifft ferner eine Achsaufhängung für eine gelenkte Starrachse in Fahrzeugen, insbesondere Nutzfahrzeugen, umfassend einen Vierpunktlenker nach einem der vorhergehenden Aspekte.

Die Erfindung betrifft ferner ein Fahrzeug, insbesondere Nutzfahrzeug, mit einer solchen Achsaufhängung oder einem Vierpunktlenker, wie vorstehend beschrieben.

Weitere Einzelheiten und Vorteile der Erfindung werden im Folgenden unter Bezug auf die beigefügten Zeichnungen beschrieben. Es zeigen:
- Figur 1: eine Perspektivansicht eines Vierpunktlenkers gemäß einem Ausführungsbeispiel; und
- Figur 2: eine Seitenansicht im Schnitt des Vierpunktlenkers der Figur 1.

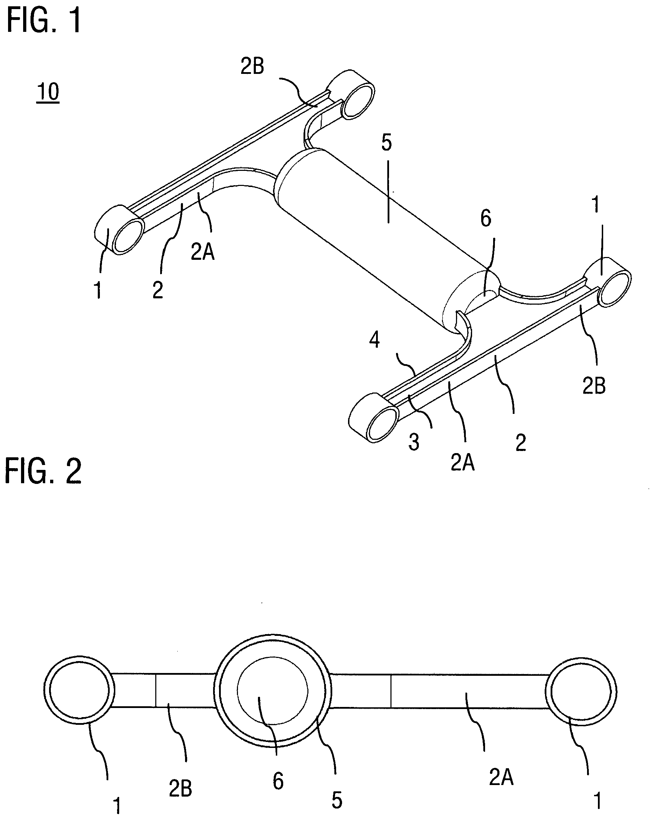

Der in Figur 1 gezeigte Vierpunktlenker 10 besteht aus einem Mittelteil 5, an dessen beiden Enden je ein Schenkel 2 des Vierpunktlenkers im Wesentlichen senkrecht zum Mittelteil 5 drehfest angeordnet ist, wobei ein erster Abschnitt der Schenkel 2 jeweils durch einen der ersten Lenkerarme 2A und ein zweiter Abschnitt der Schenkel 2 jeweils durch einen der zweiten Lenkerarme 2B gebildet ist. Mittels der zwei ersten Lenkerarme 2A ist der Vierpunktlenker 10 in an sich bekannter Weise an einem Fahrzeugrahmen, beispielsweise einem Fahrzeugrahmenlängsträger oder allgemein einem Fahrzeugaufbau, anlenkbar und mittels der zweiten Lenkerarme 2B an der Fahrzeugachse. Hierbei sind innenseitig an den Schenkeln 2 zwei hohlzylinderförmige Lageraufnahmen 1 angeformt. Die beiden Schenkel 2 sind als Schmiedeteile mit einem H-Profil bzw. Doppel U-Profil gefertigt und an den äußeren Endbereich 6 des Mittelteils 5 angeschweißt. Die gezeigte Ausgestaltung und Formgebung der Lenkerarme ist lediglich beispielhaft.

Das Mittelteil 5 ist als geschlossener Hohlzylinder ausgebildet, der zur Aufnahme eines Fluids, beispielsweise Druckluft oder Lenköl, ausgebildet ist. Hierzu sind Anschlüsse für die Fluidversorgung vorgesehen, die in Figur 1 jedoch nicht dargestellt sind. In Figur 2 ist der Vierpunktlenker 10 der Figur 1 nochmals in einer Seitenansicht im Schnitt dargestellt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation oder ein bestimmtes Material an die Lehre der Erfindung anzupassen, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Lageraufnahmen
- 2: Schenkel
- 2A: Erste Lenkerarme
- 2B: Zweite Lenkerarme
- 3,4: Profilkanten der Schenkel
- 5: Als geschlossener Hohlraum ausgeführtes Mittelteil
- 6: Endbereich des Mittelteils

## Patentansprüche

1. Vierpunktlenker zur Anbindung einer Fahrzeugstarrachse an einem Fahrzeugrahmen eines Fahrzeugs, insbesondere eines Nutzfahrzeugs, mit vier durch einen Zentralbereich fest miteinander verbundenen und sich von dem Zentralbereich wegerstreckenden Lenkerarmen, von denen zwei erste Lenkerarme an dem Fahrzeugrahmen und zwei zweite Lenkerarme an der Fahrzeugachse anlenkbar sind, wobei der Zentralbereich als Mittelteil (5) ausgeführt ist, an dessen beiden Enden je ein Schenkel (2) im Wesentlichen senkrecht zum Mittelteil (5) drehfest angeordnet ist, wobei ein erster Abschnitt der Schenkel (2) jeweils durch einen der ersten Lenkerarme (2A) und ein zweiter Abschnitt der Schenkel (2) jeweils durch einen der zweiten Lenkerarme (2B) gebildet werden,
**dadurch gekennzeichnet,**
**dass** der Zentralbereich (5) einen Hohlraum aufweist, der zur Speicherung eines Fluids ausgebildet ist; und
**dass** das Mittelteil (5) so ausgeführt ist, dass sich das Volumen des Hohlraums des Mittelteils (5) bei einer Torsionsbewegung des Mittelteils verändert.

2. Vierpunktlenker nach Anspruch 1, **dadurch gekennzeichnet, dass** das Mittelteil hohlzylinderförmig, gekröpft und/oder zumindest abschnittweise verjüngend ausgeführt ist.

3. Vierpunktlenker nach einem der Ansprüche 1 oder 2, **dadurch gekennzeichnet, dass** das Mittelteil (5) aus einem duktilen Werkstoff gefertigt ist.

4. Vierpunktlenker nach einem der vorhergehenden Ansprüche, **dadurch gekennzeichnet, dass** der Zentralbereich einen Anschluss für die Fluidversorgung aufweist.

5. Vierpunktlenker nach einem der Ansprüche 1 bis 4, **dadurch gekennzeichnet, dass** der Vierpunktlenker mehrteilig ausgeführt ist,
(a) wobei das Mittelteil (5) über eine formschlüssige Verbindung, vorzugsweise eine Verzahnung, mit den Schenkeln (2) verbunden ist, wobei die formschlüssige Verbindung zusätzlich über eine Niet- oder Schraubverbindung gesichert ist; oder
(b) wobei das Mittelteil (5) stoffschlüssig mit den Schenkeln (2) verbunden ist, vorzugweise durch Kleben oder Schweißen.

6. Vierpunktlenker nach einem der vorhergehenden Ansprüche, **dadurch gekennzeichnet, dass** der Zentralbereich aus einem Kunststoff oder zumindest teilweise aus einem Kunststoff gefertigt ist, wobei der Kunststoff vorzugsweise ein glasfaser- oder kohlenstofffaserverstärkter Kunststoff ist.

7. Vierpunktlenker nach einem der vorhergehenden Ansprüche, **dadurch gekennzeichnet, dass** eine im montierten Zustand des Vierpunktlenkers der Fahrbahn zugewandte Seite des Vierpunktlenkers eine bessere schlagdämpfende Eigenschaften aufweist als eine der Fahrbahn abgewandte Seite des Vierpunktlenkers.

8. Vierpunktlenker nach Anspruch 7, **dadurch gekennzeichnet,**
(a) **dass** die der Fahrbahn zugewandte Seite des Vierpunktlenkers zumindest teilweise mit einer Gummibeschichtung versehen ist; und/oder
(b) **dass** die der Fahrbahn zugewandte Seite des Vierpunktlenkers zumindest teilweise aus einem Material mit höherer Duktilität, insbesondere mit einem duktilen Stahl, als die der Fahrbahn abgewandte Seite gebildet ist.

9. Vierpunktlenker nach einem der vorhergehenden Ansprüche, wobei der Hohlraum geschlossen oder verschließbar ausgeführt ist.

10. Achsaufhängung für eine gelenkte Starrachse in Fahrzeugen, insbesondere Nutzfahrzeugen, umfassend einen Vierpunktlenker nach einem der vorhergehenden Ansprüche.

11. Fahrzeug, insbesondere Nutzfahrzeug, mit einem Vierpunktlenker nach einem der Ansprüche 1 bis 9 und/oder einer Achsaufhängung nach Anspruch 10.

## Claims

1. A four-point link for the attachment of a rigid vehicle axle to a vehicle frame of a vehicle, in particular of a utility vehicle, having four link arms which are fixedly connected to one another by a central region and which extend away from the central region and of which two first link arms can be articulated on the vehicle frame and two second link arms can be articulated on the vehicle axle, wherein the central region is configured as a central part (5), on the two ends of which in each case one limb (2) is rotationally fixedly arranged substantially perpendicularly to the central part (5), wherein a first section of the limbs (2) is formed in each case by one of the first link arms (2A) and a second section of the limbs (2) is formed in each case by one of the second link arms (2B),
**characterized**
**in that** the central region (5) has a cavity which is designed for storing a fluid; and
**in that** the central part (5) is configured such that the volume of the cavity of the central part (5) changes during a torsional movement of the central part.

2. The four-point link according to Claim 1, **characterized in that** the central part is of hollow cylindrical, cranked and/or, at least in sections, tapering configuration.

3. The four-point link according to either of Claims 1 and 2, **characterized in that** the central part (5) is manufactured from a ductile material.

4. The four-point link according to one of the preceding claims, **characterized in that** the central region has a connector for the fluid supply.

5. The four-point link according to one of Claims 1 to 4, **characterized in that** the four-point link is of multi-part design,
(a) wherein the central part (5) is connected by means of a positively locking connection, preferably a toothing, to the limbs (2), wherein the positively locking connection is additionally secured by means of a rivet or screw connection; or
(b) wherein the central part (5) is connected to the limbs (2) cohesively, preferably by adhesive bonding or welding.

6. The four-point link according to one of the preceding claims, **characterized in that** the central region is manufactured from a plastic or is at least partially manufactured from a plastic, wherein the plastic is preferably a glass-fibre-reinforced or carbon-fibre-reinforced plastic.

7. The four-point link according to one of the preceding claims, **characterized in that** a side of the four-point link facing toward the roadway in the installed state of the four-point link exhibits better impact-damping characteristics than a side of the four-point link averted from the roadway.

8. The four-point link according to Claim 7, **characterized**
(a) **in that** the side of the four-point link facing toward the roadway is at least partially equipped with a rubber coating; and/or
(b) **in that** the side of the four-point link facing toward the roadway is at least partially formed from a material with higher ductility, in particular with a ductile steel, than the side averted from the roadway.

9. The four-point link according to one of the preceding claims, wherein the cavity is configured so as to be closed or closable.

10. An axle suspension for a steered rigid axle in vehicles, in particular utility vehicles, comprising a four-point link according to one of the preceding claims.

11. A vehicle, in particular a utility vehicle, having a four-point link according to one of Claims 1 to 9 and/or an axle suspension according to Claim 10.

## Revendications

1. Bielle à quatre points pour la liaison d'un essieu rigide de véhicule à un châssis de véhicule d'un véhicule, en particulier d'un véhicule utilitaire, avec quatre bras de bielle reliés fixement l'un à l'autre par une région centrale et s'écartant de la région centrale, parmi lesquels deux premiers bras de bielle peuvent être articulés au châssis de véhicule et deux deuxièmes bras de bielle peuvent être articulés à l'essieu de véhicule, dans laquelle la région centrale est réalisée en forme de partie centrale (5), aux deux extrémités de laquelle est respectivement disposée sans rotation une branche (2) essentiellement perpendiculaire à la partie centrale (5), dans laquelle une première partie des branches (2) est formée respectivement par un des premiers bras de bielle (2A) et une deuxième partie des branches (2) est formée respectivement par un des deuxièmes bras de bielle (2B), **caractérisée en ce que** la région centrale (5) présente une cavité, qui est conçue pour stocker un fluide, et **en ce que** la partie centrale (5) est réalisée de telle manière que le volume de la cavité de la partie centrale (5) change lors d'un mouvement de torsion de la partie centrale.

2. Bielle à quatre points selon la revendication 1, **caractérisée en ce que** la partie centrale est réalisée sous forme cylindrique creuse, coudée et/ou se rétrécissant au moins localement.

3. Bielle à quatre points selon une des revendications 1 ou 2, **caractérisée en ce que** la partie centrale (5) est fabriquée en un matériau ductile.

4. Bielle à quatre points selon l'une quelconque des revendications précédentes, **caractérisée en ce que** la région centrale présente un raccord pour l'alimentation en fluide.

5. Bielle à quatre points selon l'une quelconque des revendications 1 à 4, **caractérisée en ce que** la bielle à quatre points est réalisée en plusieurs parties,
(a) dans laquelle la partie centrale (5) est assemblée aux branches (2) par un assemblage emboîté, en particulier l'assemblage emboîté est sécurisé en outre par une liaison par rivets ou par vis; ou
(b) dans laquelle la partie centrale (5) est assemblée aux branches (2) par une liaison matérielle, de préférence par collage ou soudage.

6. Bielle à quatre points selon l'une quelconque des revendications précédentes, **caractérisée en ce que** la région centrale est fabriquée en une matière plastique ou au moins en partie en matière plastique, dans laquelle la matière plastique est de préférence une matière plastique renforcée par des fibres de verre ou des fibres de carbone.

7. Bielle à quatre points selon l'une quelconque des revendications précédentes, **caractérisée en ce qu'**un côté de la bielle à quatre points tourné vers la chaussée dans l'état monté de la bielle à quatre points présente une meilleure aptitude à amortir les chocs qu'un côté de la bielle à quatre points détourné de la chaussée.

8. Bielle à quatre points selon la revendication 7, **caractérisée en ce que**
(a) le côté de la bielle à quatre points tourné vers la chaussée est au moins en partie muni d'un revêtement de caoutchouc; et/ou
(b) le côté de la bielle à quatre points tourné vers la chaussée est formé au moins en partie en un matériau à plus haute ductilité, en particulier en un acier ductile, que le côté détourné de la chaussée.

9. Bielle à quatre points selon l'une quelconque des revendications précédentes, **caractérisée en ce que** la cavité est fermée ou peut être fermée.

10. Suspension d'essieu pour un essieu rigide articulé dans des véhicules, en particulier des véhicules utilitaires, comprenant une bielle à quatre points selon l'une quelconque des revendications précédentes.

11. Véhicule, en particulier véhicule utilitaire avec une bielle à quatre points selon l'une quelconque des revendications 1 à 9 et/ou une suspension d'essieu selon la revendication 10.
